Europäisches Patentamt

**European Patent Office**

**Office européen des brevets**

(11) Numéro de publication: **0 342 093**
**A1**

# (12) DEMANDE DE BREVET EUROPEEN

(21) Numéro de dépôt: **89401220.2**

(22) Date de dépôt: **28.04.89**

(51) Int. Cl.⁴: **G 01 S 15/42**

(30) Priorité: **10.05.88 FR 8806277**

(43) Date de publication de la demande:
**15.11.89 Bulletin 89/46**

(84) Etats contractants désignés: **DE IT NL SE**

(71) Demandeur: **THOMSON-CSF**
**51, Esplanade du Général de Gaulle**
**F-92800 Puteaux (FR)**

(72) Inventeur: **Grall, Georges**
**Thomson - CSF SCPI - Cédex 67**
**92045 Paris La Défense (FR)**

(74) Mandataire: **Desperrier, Jean-Louis et al**
**THOMSON-CSF SCPI**
**F-92045 PARIS LA DEFENSE CEDEX 67 (FR)**

(54) **Procédé de classification sonar des objets sous-marins, notamment pour mines à orin.**

㉗ L'invention concerne les sonars permettant de déterminer les caractéristiques des mines sous-marines.

Elle consiste à modifier le diagramme d'émission dans la plan vertical d'un tel sonar pour obtenir deux lobes principaux (44, 45) séparés par un zéro central. A la réception le système de visualisation gisement/fréquence présente une bande sombre (62) séparée par deux bandes lumineuses (61, 63). Lorsque l'écho d'une mine (71) persiste en traversant la zone sombre on reconnait qu'il s'agit d'une mine à orin flottant entre deux eaux.

Elle permet de repérer les mines à orin et de mesurer leur profondeur d'immersion.

FIG_7

EP 0 342 093 A1

Bundesdruckerei Berlin

## Description

## PROCEDE DE CLASSIFICATION SONAR DES OBJETS SOUS-MARINS, NOTAMMENT POUR MINES A ORIN

La présente invention se rapporte aux sonars détecteurs de mines, c'est-à-dire aux sonars qui permettent de détecter les objets sous-marins ayant renvoyé des échos sonars, à partir de la visualisation de ces échos et notamment de distinguer si ces objets sont des mines flottant entre deux eaux, en particulier des mines à orin, ou des mines posées sur le fond. Les mines à orin sont, comme on le sait, des mines flottant entre deux eaux en étant accrochées par un câble, dit orin, à un corps mort, appelé crapaud, reposant sur le fond de la mer.

Les chasseurs de mines sont classiquement munis d'un sonar actif qui fonctionne à des fréquences relativement élevées, de plusieurs dizaines de kHz, pour présenter une résolution angulaire compatible avec la taille des mines.

Le sonar est monté soit sur le chasseur, soit sur un poisson remorqué par le chasseur ou autopropulsé.

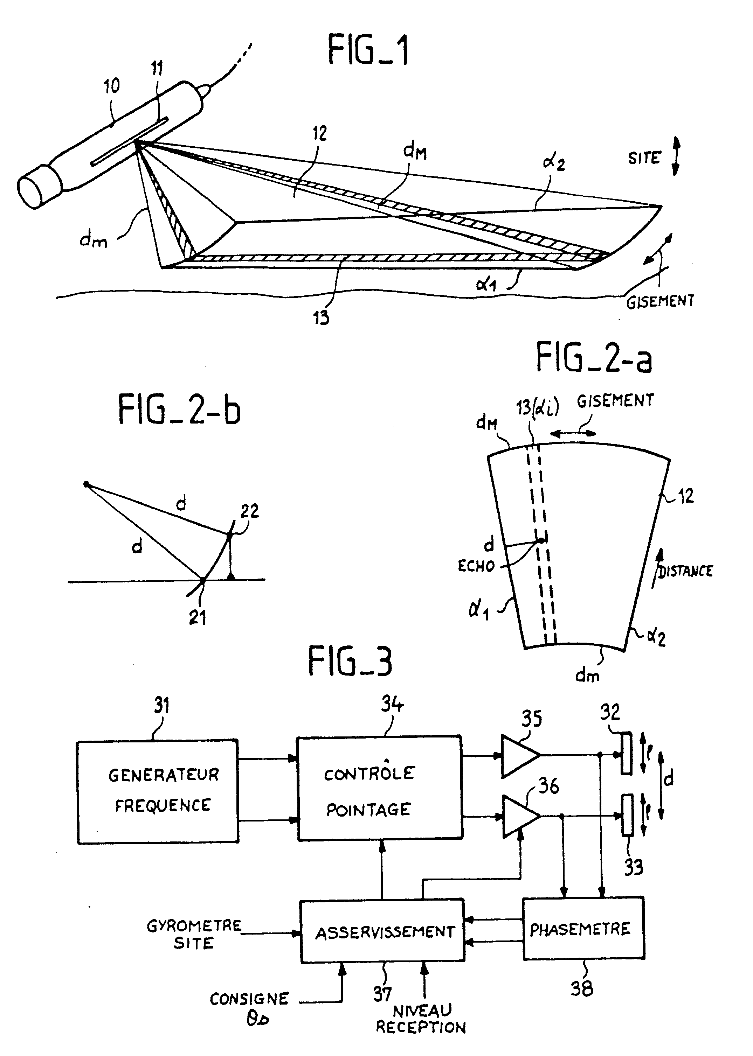

Ce sonar comporte une antenne d'émission qui insonifie le milieu marin de manière à obtenir une insonification uniforme dans un volume s'étendant par exemple sur 30° en gisement et 80° en site. Le sonar comporte également une antenne de réception permettant de former des voies directives en gisement pour obtenir la résolution angulaire désirée selon le gisement. En formant ainsi par exemple, comme représenté sur la figure 1, 100 voies telles que 13 de 0,3° de largeur angulaire, on peut couvrir un secteur angulaire insonifié égal à 30°.

On a représenté sur la figure 1 le volume insonifié à partir d'un sonar monte sur un poisson. Il correspond à une zone d'observation 12 délimitée en gisement par les angles $\alpha_1$ et $\alpha_2$ et en distance par les distances $d_M$ et $d_m$. Ces distances correspondent, pour $d_M$ à portée maximale au-delà de laquelle l'écho devient trop faible, et pour $d_m$ à une distance proche de la hauteur d'eau entre le poisson et le fond. Le fond est insonifié de manière rasante.

On a représenté sur la figure 2a la zone 12 explorée par le sonar telle qu'on la voit représentée sur l'écran de visualisation de ce sonar en mode B (gisement-distance). Chaque voie telle que 13 correspond à un angle $\alpha_i$ compris entre $\alpha_1$ et $\alpha_2$ et est représentée par une bande qui est figurée élargie sur la figure 2 pour les besoins du dessin. Tout écho détecté à l'intérieur de la voie 13 se manifestera sur la bande correspondante sur l'écran de visualisation par un point brillant. Ce point brillant apparaîtra sur un fond moins lumineux à une distance d quelque soit sa hauteur sur le fond. Il s'ensuit que l'on ne sait pas distinguer, comme représenté à la figure 2b, si l'écho correspond à une mine 21 posée sur le fond où à une mine à orin 22.

Pour pouvoir distinguer les échos correspondant à des objets posés sur le fond ou flottant entre deux eaux, l'invention propose de modifier le diagramme d'émission en site du sonar pour obtenir deux lobes principaux séparés par un zéro situé dans le champ d'observation du sonar. On obtient une zone sombre sur l'écran de visualisation correspondant à la distance oblique du zéro. En présence d'un objet situé sur le fond de la mer à cette distance, l'écho correspondant à cet objet disparait dans la zone sombre, alors qu'en présence d'un objet flottant entre deux eaux situé à la même distances oblique, l'écho demeure et son contraste augmente par rapport à la zone sombre dans laquelle il passe, permettant à l'opérateur de classifier l'objet.

D'autres particularités et avantages de l'invention apparaîtront clairement dans la description suivante faite en regard des figures annexées qui représentent :

- La figure 1, une vue en perspective cavalière du secteur d'observation insonifié par un sonar porte par un poisson ;
- les figure 2a et 2b, des schémas explicatifs de la visualisation des objets par ce sonar ;
- la figure 3, le schéma synoptique de l'émetteur d'un sonar selon l'invention ;
- la figure 4, le diagramme d'émission d'un sonar selon l'invention ;
- la figure 5, un schéma dans le plan vertical de l'insonification du fond de la mer par un sonar selon l'invention ;
- la figure 6, l'écran du sonar des figures 4, 5 et 7 ;
- la figure 7, une représentation simplifiée du schéma de la figure 5 dans laquelle on voit une mine à orin ; et
- la figure 8, un diagramme temporel du signal de réception du sonar selon l'invention.

On a représenté sur la figure 3 le schéma synoptique d'un émetteur de sonar permettant de mettre en oeuvre l'invention.

Un générateur de fréquence 31 permet d'obtenir la fréquence de fonctionnement de l'antenne d'émission du sonar. Celle-ci est appliquée à deux rangées de transducteurs 32 et 33 par l'intermédiaire d'un dispositif de contrôle de pointage 34 dont le rôle sera explicité plus loin, et de deux amplificateurs 35 et 36. Ces transducteurs ont une hauteur 1 et sont séparés d'une distance d.

Les deux rangées contenant respectivement les transducteurs 32 et 33 sont parallèles au fond de la mer. On définit dans un plan vertical perpendiculaire au plan de ces deux rangées un angle $\theta$ pris par rapport à la normale au plan des deux rangées.

Si $\lambda$ est la longueur d'onde correspondant à la fréquence centrale d'émission, la fonction de directivité $F(\theta)$ en fonction de $\theta$, c'est-à-dire l'amplitude du signal émis en fonction de cet angle est donnée par la formule :

$$F(\theta) = \frac{\sin(\pi l\ \sin\theta/\lambda)}{\pi l\ \sin\theta/\lambda}\ .\ \sin(\pi d\ \sin\theta/\lambda)$$

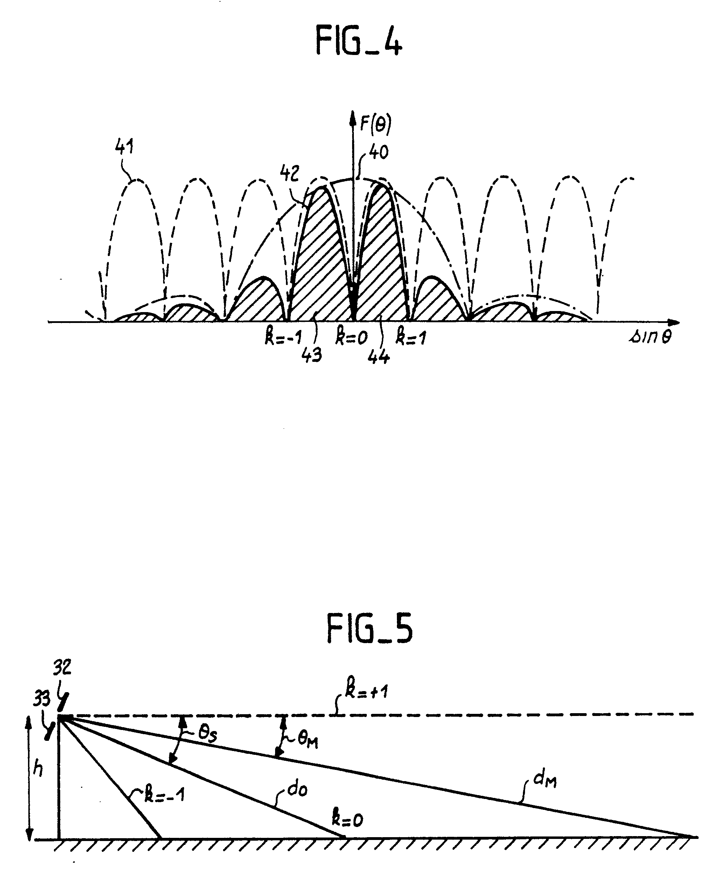

On a représenté sur la figure 4 la fonction $F(\theta)$ (en ordonnée) en fonction de $\sin(\theta)$ (en abcisse) c'est-à-dire le diagramme d'émission du sonar. $F(\theta)$ correspond à la courbe 42 délimitant une surface hachurée et représente le produit de la directivité propre de chaque rangée de transducteurs, représenté par la courbe 40 en trait mixte, par $\sin(\pi\ d.\ \sin\theta/\lambda)$. On constate, selon un résultat connu, que cet fonction $F(\theta)$ présente des zéros dans les direction $\theta_z$ telle que : $\sin\theta_z = \pm\ k\lambda/d$, avec k entier positif.

La figure 4 correspond au cas particulier où $d = 21$. On constate qu'il y a deux lobes principaux entourant un zéro central correspondant à $k = 0$. Ces lobes sont délimités par les deux premiers zéros, l'un positif pour $k = +1$ et l'autre négatif pour $k = -1$. Il y a bien entendu une succession de lobes secondaires dont le niveau est plus faible. On a représenté sur la figure 5 une vue du milieu marin et du fond de la mer prise dans un plan vertical passant par le milieu de l'antenne d'émission. L'antenne est formée de deux rangées de transducteurs 32 et 33. Cette antenne est inclinée vers le fond de la mer de telle manière que la direction perpendiculaire au plan de l'antenne, correspondant au zéro central ($k = 0$), soit inclinée d'un angle $\theta_s$ par rapport à l'horizontale, plus grand que l'angle $\theta_M$ correspondant à la distance maximum $d_M$ (portée).

La géométrie du système et notamment l'écartement d entre les 2 rangées de transducteurs 32 et 33 est déterminée en fonction des conditions opérationnelles du système : portée $d_M$, hauteur h et fréquence d'émission.

Ces conditions sont à titre d'exemple :

$h = 50$ m

$d_M \simeq 1000$ m

fréquence d'émission = 100 kHz

On choisit ainsi un angle $\theta_s$ tel que la distance sonar-fond $d_o$ dans la direction du zéro soit proche de 500 m, soit $\theta_s = 5,75°$.

Pour obtenir une insonification satisfaisante telle que le zéro supérieur $k = +1$ soit à peu près à l'horizontale, on choisit $d = 10\lambda$, soit $1 = 5\lambda$. La valeur de $\frac{\lambda}{d}$ est voisine de $\theta_s$.

La distance d vaut ainsi environ 15 cm ce qui est tout à fait compatible avec les exigences d'encombrement que l'on a sur un poisson remorqué.

Du fait que le véhicule porteur du sonar est soumis à des mouvements (roulis, tangage, ...), il est nécessaire de stabiliser les faisceaux d'émission en site par rapport au fond.

Ceci s'obtient par le dispositif de contrôle de pointage 34 représenté sur la figure 3. Ce dispositif fonctionne en contrôlant la phase des signaux délivrés par le générateur 31 sous la commande d'un circuit d'asservissement 37. Ce circuit d'asservissement fonctionne en comparant les signaux d'écarts de phase en sortie des amplificateurs 35 et 36, déterminés par un phasemètre 38, par rapport à une valeur de consigne $\theta_s$ et en fonction des indications données par un gyromètre de site qui mesure l'assiette du porteur du sonar.

On modifie ainsi l'inclinaison apparente de l'antenne de manière électronique, tout en laissant cette antenne mécaniquement fixe.

Compte tenu de l'existence du zéro central, il existe donc une zone mal insonifiée entre les deux lobes 44 et 45, que l'opérateur va utiliser pour pouvoir distinguer une mine à orin d'une mine posée sur le fond.

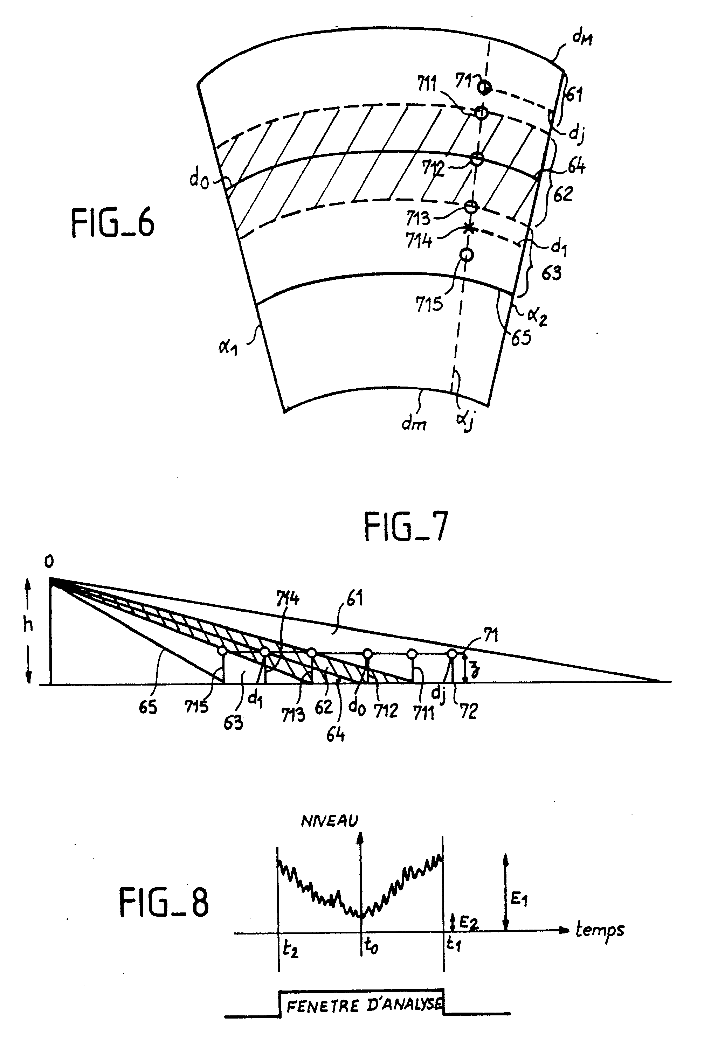

On a représenté sur la figure 6 l'écran de visualisation du sonar, sur lequel la représentation est semblable à celle de la figure 2, compte tenu des différences d'insonification. La représentation de l'espace insonifié se présente donc sous la forme d'un segment de couronne délimité par les deux arcs de cercle correspondant à $d_M$ et $d_m$, et par deux fragments de rayons correspondant aux angles limites en gisement $\alpha 1$ et $\alpha 2$ :

- une première zone 61 qui correspond à la réverbération par le fond de la mer du signal acoustique reçu dans le lobe 44 ; elle présente une brillance que l'on qualifie de "normale".

- une zone sombre 62 pour laquelle il y a peu de réverbération puisqu'il y a peu d'insonification, avec en son milieu une ligne noire 64 correspondant au zéro principal.

- une troisième zone 63 correspondant à la réverbération par le fond de la mer du signal acoustique reçu dans le lobe 45. Cette zone présente une brillance semblable à celle de la zone 61 ; elle se termine par une zone sombre suivie d'une ligne noire 65 correspondant au zéro inférieur.

En présence d'objets dans le volume insonifié qui renvoient des échos vers le sonar, ces échos se traduisent par des points brillants sur la surface de l'écran, mais ces points ne sont repérés, comme on l'a vu plus haut, que par leur gisement et leur distance et ce mode de représentation ne permet pas de distinguer si l'objet flotte entre deux eaux ou s'il est posé sur le fond de la mer.

On a ainsi représenté sur la figure 7 une mine 71 flottant entre deux eaux à une altitude z, en étant retenue par un orin en un point 72 du fond de la mer. L'écho produit par cette mine est représenté sur la figure 6, où l'on constate qu'il se trouve dans un gisement $\alpha_j$ qui est correct et à une distance $d_j$, elle-même également correcte mais on ne sait pas si cet écho est une mine à orin à $d_j$ ou bien une mine posée sur le fond à $d_j$, puisque cette distance $d_j$ correspond à tous les points d'un arc de cercle de diamètre $d_j$ centré sur le centre de phase 0 de l'antenne, situé dans le plan vertical de la figure 7.

Au fur et à mesure que le sonar avance, l'écho traverse la zone 61 et, lorsqu'il arrive à la limite entre cette zone et la zone sombre 62, c'est-à-dire dans la position 711 sur la figure 7, cet écho ne s'atténue pas en pénétrant dans cette zone 62 puisqu'il reste dans le lobe 44. Tout au contraire, le contraste apparent entre l'écho et la luminosité de la zone où il se trouve commence à augmenter puisque la zone 62 est plus sombre que la zone 61.

Au fur et à mesure que le navire avance, l'écho traverse la zone sombre 62, puis lorsque la mine arrive à la distance $d_o$, 712, il traverse la ligne noire 64 et il y a augmentation brutale de son contraste apparent. L'opérateur qui surveille l'écran de visualisation conclut qu'il est en présence d'un objet flottant entre deux eaux. Si en plus cet écho est immobile, il y a de fortes chances que ce soit une mine à orin.

Lorsque la mine arrive dans la position 713, qui est en limite de la zone insonifiée par le lobe 44, l'écho commerce à disparaître de l'écran.

Puis, ensuite, l'écho disparaît complètement lorsque la mine se trouve dans la position 714 à la distance $d_1$ dans la direction du zéro.

Lorsque la mine parvient dans la position 715, correspondant à la rentrée dans le lobe 45, l'écho réapparaît.

Suivant l'invention, l'opérateur peut déterminer la hauteur à laquelle flotte la mine au-dessus du fond à partir des deux instants où respectivement la mine traverse la ligne noire 64 et celui où elle disparaît.

Pour cela l'opérateur mesure l'intervalle de temps séparant ces deux instants, ce qui fournit la distance $\Delta X$ parcourue par le sonar. Par simple application des règles élémentaires de la géométrie, l'altitude z est donnée par

$$z = h \times \frac{\Delta X}{X_o} \text{ avec } X_o = (d^2_o - h^2)^{1/2}.$$

Selon une variante de fonctionnement, l'opérateur peut, lorsqu'il dispose d'une commande de pointage de l'antenne du sonar, obtenir immédiatement la hauteur de la mine en effectuant deux pointages successifs du zéro, le sonar étant immobile :
- un premier pointage dans la direction faisant passer l'écho sur la ligne noire 64 ;
- un deuxième pointage faisant disparaître l'écho.

Ces deux pointages successifs permettent d'obtenir immédiatement z sans attendre la disparition naturelle de l'écho par suite de l'avance du sonar.

L'expérimentation a montré que, compte tenu de la vigilance de l'opérateur ainsi que de la vitesse à laquelle l'écho défile sur l'écran, il est généralement nécessaire que le contraste entre l'écho et la réverbération soit au moins égal à 10 dB en franchissant la ligne noire 64.

Cette ligne noire 64 n'est pas en fait totalement noire à cause de la gigue de phase de la boucle de stabilisation en phase vu figure 3 qui entraîne une certaine insonification du fond marin dans la zone correspondant au zéro central. Il ne faut donc pas que cette gigue de phase entraîne une trop grande imprécision sur le pointage du zéro, qui serait alors mal stabilisé et les 10 dB de contraste ne seraient pas tenus. L'expérience a montré que, en utilisant la technologie tout à fait usuelle pour réaliser l'émetteur d'un tel sonar, cette contrainte sur la gigue de phase est largement respectée.

Par ailleurs les zéros, en particulier le zero central, ne sont jamais totalement nuls, en raison des diverses imprécisions sur les paramètres qui définissent le système. Parmi ces paramètres, le plus important est l'égalité des niveaux d'émission sur chaque transducteur. Ainsi un écart de 1dB entre les niveaux d'émission de ces transducteurs a pour conséquence que le niveau d'émission dans la direction du zéro principal ne peut descendre en dessous de -20 dB par rapport au niveau maximum des deux lobes principaux. Ce phénomène vient lui aussi limiter la variation de contraste de l'écho au passage de la zone sombre et il convient de le minimiser.

Pour cela, on peut par exemple introduire dans au moins l'un des amplificateurs 35 et 36 une commande de gain variable. Ce gain variable pourrait être commandé en mesurant directement les niveaux en sortie de ces amplificateurs, mais la précision sur le résultat final serait faible. On préfère donc mesurer directement le résultat à obtenir, c'est-à-dire l'écart de niveau entre les signaux reçus dans la direction des sommets des lobes principaux et celui reçu dans la direction du zéro central.

En se référant à la figure 8, le diagramme supérieur représente le niveau de réception en fonction du temps et le diagramme inférieur la fenêtre d'analyse pendant laquelle le signal reçu est effectivement traité par le récepteur.

La courbe représentant ce niveau a une forme sensiblement en V entre l'instant d'ouverture $t_1$ et l'instant de fermeture $t_2$, avec un minimum à l'instant $t_0$ correspondant au passage du zéro central. Les niveaux maximum et minimum sont respectivement $E_1$ et $E_2$ et le procédé consiste à mesurer ce rapport $E_1/E_2$ et à régler le gain de l'amplicateur muni d'un moyen de réglage, de manière à maximiser ce rapport. Pour cela on utilise de manière connue des algorithmes qui convergent au bout d'une dizaine de récurrences du sonar. Dans une réalisation préférée l'asservissement de phase est réalisé dans le circuit 37 de manière numérique, ce qui permet d'utiliser ces circuits pour mettre en oeuvre également l'asservissement en amplitude des amplificateurs de sortie.

Le système suivant l'invention fonctionne également lorsque les émissions sont modulées en fréquence afin de réaliser un traitement de compression d'impulsion à la réception.

Lorsque le sonar est porté par un poisson, plus l'immersion I de celui-ci est grande, et moins le lobe supérieur 44 est incliné sur l'horizontale. A partir d'une certaine immersion, une partie de ce lobe est dirigée vers la surface de l'eau, ce qui provoque une réverbération des signaux sonar sur cette surface. Les signaux renvoyés alors par les endroits de la surface situés à la distance $d_o$ viennent limiter la variation de contraste écho/réverbération du fond, qui peut ainsi devenir non détectable.

4

Pour pallier cet inconvénient, l'invention propose de créer un deuxième zéro principal dans la direction de la surface correspondant à cette distance $d_o$, donnée par Arc sin $\frac{1}{do}$, en utilisant une antenne dite adaptative, comportant par exemple 3 rangées de transducteurs, tenant compte des contraintes suivantes :

- le niveau dans la direction de la mine à la distance $d_o$ est normalisé ; et
- les échos, dont la durée est connue, sont éliminés par une fenêtre à trous pour minimiser les signaux de réverbération à la distance $d_o$.

Le système selon l'invention peut être utilisé en permanence ou à la demande de l'opérateur lorsque l'on a détecté la présence d'un écho suspect lors d'une émission classique où l'on n'utilise par exemple qu'un seul des deux transducteurs ou lorsqu'on alimente ces deux transducteurs selon une relation de phase qui donne un lobe unique semblable à celui utilisé dans l'art antérieur.

**Revendications**

1. Procédé de classification sonar des objets sous-marins, notamment pour mines à orin, du type consistant à insonifier un secteur sous-marin déterminé et à visualiser les échos renvoyés par le fond de la mer et les objets flottant entre deux eaux selon un mode gisement/distance, caractérisé en ce que l'on insonifie ledit secteur selon un diagramme comportant dans le plan vertical de ce secteur deux lobes d'émission (44, 45) séparés par un zéro central, ce qui se manifeste par la visualisation d'une zone sombre (62) entourée par deux zones lumineuses (61, 63), et que l'on distingue les objets flottant entre deux eaux (71) des objets posés au fond de la mer par le fait que leur écho ne disparaît pas en pénétrant dans ladite zone sombre.

2. Procédé selon la revendication 1, caractérisé en ce que, pour mesurer la hauteur z de l'objet flottant entre deux eaux (71), on mesure la distance $\Delta X$ parcourue par le sonar entre l'instant où l'écho de l'objet traverse une ligne noire (64) située sensiblement au centre de la zone sombre (62) et l'instant où cet écho disparaît, on mesure la distance $d_o$ correspondant au passage de la ligne noire, et et applique la formule

$$z = h \frac{\Delta X}{(do^2 - h^2)^{\frac{1}{2}}}.$$

3. Procédé selon la revendication 2, caractérisé en ce que l'on obtient la hauteur z en effectuant successivement un premier pointage dans la direction où serait l'objet s'il reposait sur le fond de la mer et qui correspond au passage de l'écho dans la zone sombre et un deuxième pointage faisant disparaître l'écho de cet objet, le sonar étant immobile.

4. Procédé selon l'une quelconque des revendications 1 à 3 caractérisé en ce que l'on émet deux signaux acoustiques sensiblement identiques à partir de deux transducteurs (32, 33) distincts, pour obtenir un diagramme d'interférence de ces émis sions produisant au moins deux lobes principaux séparés par un zéro central.

5. Procédé selon la revendication 4, caractérisé en ce que l'on minimise le niveau résiduel émis dans la direction du zéro central en mesurant le rapport $E_1$ sur $E_2$ entre l'amplitude maximale reçue $E_1$ et l'amplitude minimale reçue $E_2$ et en réglant l'amplitude émise par chacun des deux transducteurs de manière à maximiser ce rapport $E_1/E_2$.

6. Procédé selon l'une quelconque des revendications 1 à 5, caractérisé en ce que l'on module en fréquence les signaux d'émission et que l'on effectue une compression d'impulsion sur les signaux reçus.

7. Procédé selon l'une quelconque des revendications 1 à 6, caractérisé en ce que l'on modifie le diagramme (44, 45) d'insonification pour obtenir un deuxième zéro principal dirigé vers la surface dans une direction telle que cette surface soit à la même distance du sonar que le fond dans la direction du premier zéro principal.

# FIG_1

SITE

$d_M$

$\alpha_2$

$d_m$

12

13

$\alpha_1$

GISEMENT

# FIG_2-a

GISEMENT

$d_M$   13($\alpha_i$)

d

ECHO

$\alpha_1$

12

DISTANCE

$\alpha_2$

$d_m$

# FIG_2-b

d

d

22

21

# FIG_3

| 31 | 34 | 35 | 32 |
| GENERATEUR FREQUENCE | CONTRÔLE POINTAGE | | d |
| | | 36 | 33 |

GYROMETRE SITE

ASSERVISSEMENT

PHASEMETRE

CONSIGNE $\theta_o$

37

NIVEAU RECEPTION

38

# FIG_4

# FIG_5

FIG_6

FIG_7

FIG_8

NIVEAU

$E_1$

$E_2$

temps

$t_2$   $t_0$   $t_1$

FENETRE D'ANALYSE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-1 265 003 (ELEKTROACUSTIC) * Colonne 4, ligne 61 - colonne 7, ligne 8; figures 1-5 * | 1,4 | G 01 S 15/42 |
| A | | 2,3,5 | |
| A | DE-A-1 516 621 (ELEKTROACUSTIC) * Page 3, ligne 5 - page 11, ligne 18; figures 1-4 * | 1,5 | |
| A | DE-A-3 219 488 (HONEYWELL et al.) * Pages 6-8; figure 1 * | 1,5 | |
| A | ULTRASONICS, mai 1982, pages 107-112, Butterworth & Co. (Publishers) Ltd, Guilford, GB; F.K. LAM et al.: "An ultrasonic pulse compression system for non-destructive testing using maximal-length sequences" * En entier * | 6 | |
| A | US-A-4 586 048 (DOWNIE) * Colonnes 2-3; figures * | 7 | DOMAINES TECHNIQUES RECHERCHES (Int. Cl.4) |
| A | US-A-3 618 007 (ANDERSON) | | G 01 S |
| A | GB-A-1 316 138 (B.A.C.) | | |

Le présent rapport a été établi pour toutes les revendications

| Lieu de la recherche | Date d'achèvement de la recherche | Examinateur |
|---|---|---|
| LA HAYE | 31-07-1989 | DEVINE J.J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)